# EUROPEAN PATENT APPLICATION

(11) **EP 0 911 113 A2**
(43) Date of publication of application: **28.04.1999**
(21) Application number: 98308474.0
(22) Date of filing: 16.10.1998
(51) Int. Cl.: B23Q 11/00

(54) **A method of cutting metal and non-metal materials in a non-combustible gas atmosphere**

(30) Priority: 20.10.1997 JP 304841/97; 29.10.1997 JP 312640/97; 06.11.1997 JP 320345/97; 13.05.1998 JP 148454/98; 28.07.1998 JP 227670/98
(71) Applicant: Enshu Limited, Hamamatsu-shi, Shizuoka-ken (JP)
(72) Inventor: Ukai, Hisashi, Hamamatsu-shi, Shizuoka-ken (JP); Suzuki, Takayuki, Hamamatsu-shi, Shizuoka-ken (JP); Suzuki, Toshiyuki, Hamamatsu-shi, Shizuoka-ken (JP)
(74) Representative: Jackson, Peter Arthur

(57) **Abstract**

A cutting method of metal and non-metal materials in a non-combustible gas atmosphere by cutting the materials (W) by a tool (5) attached to a working machine (5A), by making a non-combustible gas (G) atmosphere such as a nitrogen gas or a carbon dioxide gas at the machining cutting tip (5A) or a space around the cutting tip (5A). The wear amount of the cutting tip improves, and the long tool life and the accurate machining can be obtained.

## Description

The present invention relates to a method of cutting of metal materials and non-metal materials by a tool attached to a working machine such as a milling machine, lathe, grinding machine, gear cutting machine, etc., and more particularly, to a method of cutting thereof by generating a non-combustible gas atmosphere at a cutting tip of the tool or in a space around the cutting tip of the tool.

The cooling of a tool attached to a spindle of a working machine in a prior art is carried out by injection of cutting liquid (liquid coolant) from a nozzle of a working machine to a top of the tool, in order to maintain the less friction and the lower temperature of the tool, thereby the effective cutting and the long tool life may be obtained. Simultaneously, the injection pressure of the liquid coolant also serves washing of cut chips so that the chips may be removed away from the tool.

In the thus mentioned method of cooling of the tool by using the cutting liquid (liquid coolant), the disposal of sludge is required. However, since the perished liquid coolant is incorporated in the sludge, it is difficult to dispose of the waste liquid. In particular, there has recently been an increasing necessity of preservation of the working environment, the factory overall environment, the local community environment, and eventually the global environment. Thus the waste disposal of the spent cutting liquid (liquid coolant) becomes almost impossible. Under the circumstances, the research and development in order to utilize a machining (cutting) method without using the liquid coolant is pressingly required.

Further, since the cutting liquid (liquid coolant) is recycled, the liquid may gradually rise in temperature, which may cause thermal expansion of any part of the machine. This is one of the major causes which would spoil the accuracy of machining.

To overcome the above problem, there is provided a so-called "dry cut" method which blows low-temperature air to the cutting tip without using the liquid coolant. However, according to this air-blow method, although the sludge disposal is no longer required, there arises another problem, that is, the oxidization is accelerated at the cutting point, which results in poor quality of the machined surface. In addition, since this air-blow method has the inferior cooling efficiency of the cutting tip as compared with the method using the liquid coolant, the cutting tip may become worn in a short period. Accordingly, the accuracy of the machined surface might also become poor in a short period.

When the machining is carried out on any high-viscosity material such as an aluminum material, there might be formed a built-up edge on the cutting tip, which results in poor machining accuracy of the aluminum material as well as in deterioration of machining efficiency of the tool. In addition, since there are formed coil-shape aluminum chips, it is difficult to carry out this air-blow method due to existence of these coil-shaped aluminum chips.

In the light of problems which have been arisen from the methods as above described, in which the cutting is carried out by using cutting liquid (liquid coolant) or air blow, it is a first object of the present invention to provide a method of cutting in a non-combustible gas atmosphere, in which the blow of non-combustible gas such as a nitrogen gas or a carbon dioxide gas is applied to a cutting (machining) point of a tool.

It is a second object of the present invention to provide a method of cutting in which the long tool life is secured even under the "dry-cut" operation.

It is a third object of the present invention to provide a method of cutting, in which practical conditions of machining, as well as of pressure, density and method of blowing of non-combustible gas, are disclosed in order to secure the long tool life.

It is a fourth object of the present invention to provide a method of cutting in which the improved machining accuracy against iron steel materials and aluminum materials is obtained, and further the improved cut chip disposal is obtained.

To achieve the object mentioned above, according to claim 1 of the present invention, there is provided a method of cutting of metal and non-metal materials in a non-combustible gas atmosphere by cutting metal and non-metal materials by a tool attached to a working machine, by making a non-combustible gas atmosphere such as a nitrogen gas or a carbon dioxide gas of which density is not less than 90 % at a cutting tip which applies machining to the metal and non-metal materials or at a space around the cutting tip.

Further, according to claim 2 of the present invention, there is provided a method of cutting of metal and non-metal materials in a non-combustible gas atmosphere by cutting metal and non-metal materials by a tool attached to a working machine, by making a non-oxide gas atmosphere by a nitrogen gas of which density is not less than 90 % at a cutting tip which applies machining to the metal and non-metal materials or at a space around the cutting tip, and by carrying out the machining by the cutting tip at a machining temperature of not less than 500 °C.

Preferably, according to claim 3, a coating such as a hice coating or a multi-ply coating may be formed on the cutting tip.

Preferably, according to claims 4 and 5, a most appropriate gas blow pressure of the non-combustible gas at a pressure selected between 0.2 Mpa (2 kg/cm²) and 1.0 Mpa (10 kg/cm²) may be supplied.

Preferably, according to claims 6, 7, 8 and 9, the non-combustible gas may be supplied to the cutting tip by a blowoff nozzle, or a supplying hole penetrating through the tool.

Preferably, according to claims 10 and 11, the metal material may be an iron steel material.

Preferably, according to claims 12 and 13, the metal material may be an aluminum material.

With this structure, the following functions and effects are obtained.

According to claim 1, it is possible to supply the non-combustible gas such as a nitrogen gas or a carbon dioxide gas to the cutting tip of the tool attached to the spindle of the working machine such as a lathe, to the space around the cutting tip, at a density of not less than 90 %. Since the non-combustible gas is distributed as the non-combustible gas atmosphere to the cutting tip or the space around the cutting tip, the cooling effect and the oxidation resistance effect are given to the cut chips or the cutting tip which might have been heated during cutting, thereby the wear-out of the cutting tip is avoided for a longer time, thus the long tool life can be obtained.

According to claim 2, it is possible to supply the nitrogen gas to the cutting tip of the tool attached to the spindle of the working machine such as a lathe, at a density of not less than 90 %, and it is also possible to apply the machining to such as a metal material by the cutting tip at the machining temperature of not less than 500 °C . Accordingly, the surface of the cutting tip is nitrided due to nitrogen gas and surrounding temperature of not less than 500 °C, thereby the wear resistance of the cutting tip improves, thus the long tool life can be obtained.

According to claim 3, as the layer of coating such as a hice coating or a multi-ply coating has been formed on the cutting tip, to which the nitrogen gas is supplied, and which is heated not to be less than 500 °C, the coating is further strengthened. As a result, no sparking, no defect such as a peel-off of coating, or no adhesion of cut chips was observed at the cutting tip even when the tool life of the cutting tip ended. Therefore the still longer tool life can be obtained.

According to claims 4 and 5, it is possible to control the blow pressure of the non-combustible gas so that the most appropriate pressure, according to the type of metal or non-metal material to be machined, or to the type of tool to be used, is obtained within the range of 0.2 - 1.0 Mpa (2 - 10 kg/cm²). Accordingly, the non-combustible gas can effectively and economically be blown, thereby the effective machining of the metal material or non-metal material as well as the rational extension of the tool life can be obtained.

According to claims 6, 7, 8 and 9, as the blowoff nozzle is used as a non-combustible gas supply means at the machining point of the cutting tip, the gas supply to the most appropriate machining position can be carried out regardless of shape of tool, thereby the most effective blow of the non-combustible gas can be accomplished. Further, as a supplying nozzle (the center hole) penetrated through the tool is used as a non-combustible gas blow means, the concentrated gas supply at the narrow machining point of the cutting tip can be carried out. In particular, even in the case of deep hole drilling machine, etc., it is possible to supply the gas to the workpiece to which the ordinary blowoff nozzle cannot supply the gas. Accordingly, the most effective non-combustible gas blow can be accomplished regardless of machining condition.

According to claims 10 and 11, as the non-combustible gas is blown to the iron steel type of metal material, the cooling effect and the oxidation resistance are given to the machining point of the metal material, and simultaneously the non-combustible gas is supplied to the cutting tip of the tool. Accordingly, in addition to the cooling effect and the oxidation resistance given to the cutting tip, the nitriding of the cutting tip is also made, thereby the long tool life can be obtained, thus the accurate machining of the iron steel type of metal material can be maintained for a long period.

According to claims 12 and 13, as the non-combustible gas is blown to the aluminum type of metal material, the cooling effect and the oxidation resistance are given to the machining point of the aluminum material. In particular, there is no adhesion of aluminum cut chips to the cutting tip of the tool regardless of existence of coating, and the good condition of cut chips can be obtained due to cooling effect. Accordingly, as compared with the method using the air blow, the more accurate machining of the aluminum material can be carried out.

The present invention relates to the disclosures of the Japanese utility model unexamined publication No. Sho 48-44579, the Japanese patent unexamined publications Nos. Sho 55-96249, Sho 57-211460, Sho 63-62339, Hei 5-220665 and Hei 7-501989, the Japanese patent (examined) publication No. 5-169345, and the Japanese (granted) patent No. 2568975.

The invention will be described below in detail with reference to the accompanying drawings, in which:
Figure 1 is an elevational view, including a partial expanded view of an essential part, of a working machine to which the present invention is applied, according to a first embodiment of the present invention;
Figure 2 is an elevational view, including a partial expanded view of an essential part, of a working machine to which the present invention is applied, according to a second embodiment of the present invention;
Figure 3 is a block diagram of a nitrogen gas generation device to which the present invention is applied, according to the first embodiment of the present invention;
Figure 4 is a block diagram of a nitrogen gas generation device to which the present invention is applied, according to the second embodiment of the present invention;
Figure 5 is a sectional view of a cutting tip nitrided through the cutting method of the present invention;
Figure 6 is a table showing comparative characteristics between a nitrogen gas blow according to the present invention and an air blow according to a prior art;
Figure 7 is an expanded view of a cutting tip of an end mill which was actually used for the cutting according to the present invention;
Figure 8 is a perspective view of a workpiece with an indication of cutter path, in which the cutting according to the present invention was actually carried out;
Figure 9 is a graphic chart showing a relation between nitrogen gas density and boundary wear amount of the tool according to the present invention;
Figure 10 is a graphic chart showing relations between cutting length and coating wear amount according to the present invention;
Figure 11 is a graphic chart showing relations between rotation speed of the end mill and wear amount according to the present invention;
Figure 12 is a graphic chart showing a relation between nitrogen gas blow pressure and peripheral flank wear amount of the end mill according to the present invention;
Figure 13 is a graphic chart showing relations between nitrogen gas blow temperature and peripheral flank wear amount of the end mill according to the present invention;
Figure 14 (a) and (b) are expanded views, respectively, of a cutting tip by which an aluminum material was cut according to the present invention, and of a cutting tip by which an aluminum material was cut according to the prior art;
Figure 15 is a view explaining a method of nitriding of a surface of aluminum material according to the present invention;
Figure 16 (a) and (b) are views, respectively, of cut chips of aluminum materials which were cut according to the present invention as shown in Figure 15 and cut according to the prior art;
Figure 17 (a), (b) and (c) are sectional views showing practical examples of tools having center holes according to the present invention; and
Figure 18 is a schematic view of a lathe to which the present invention is applied.

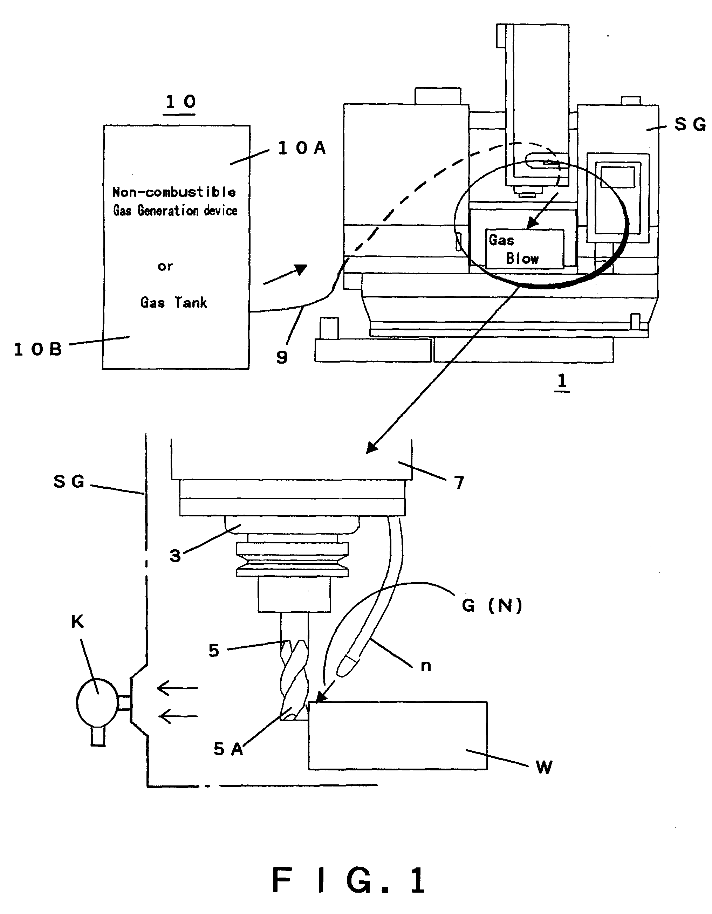

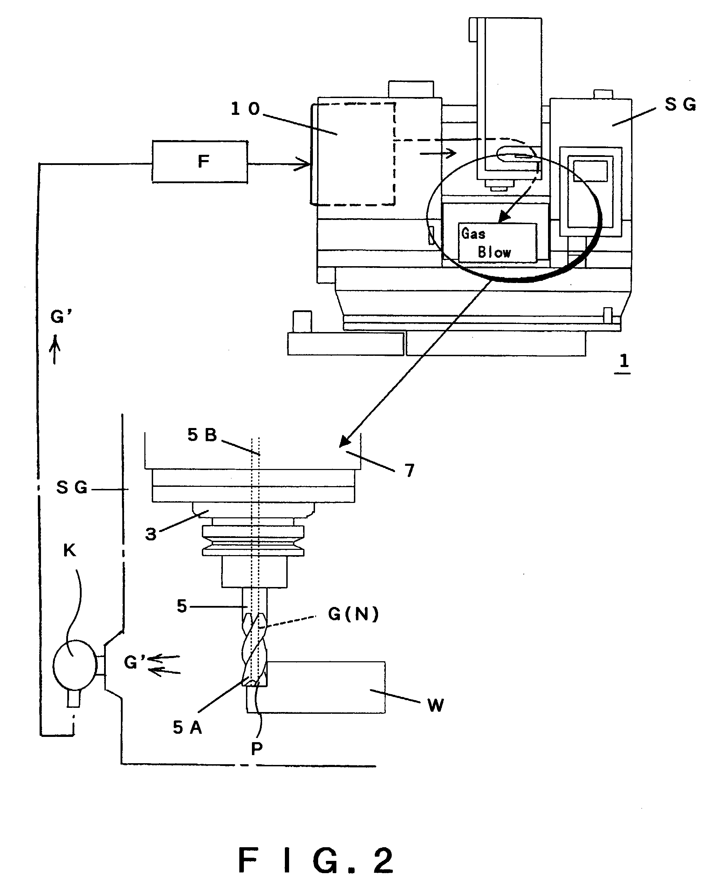

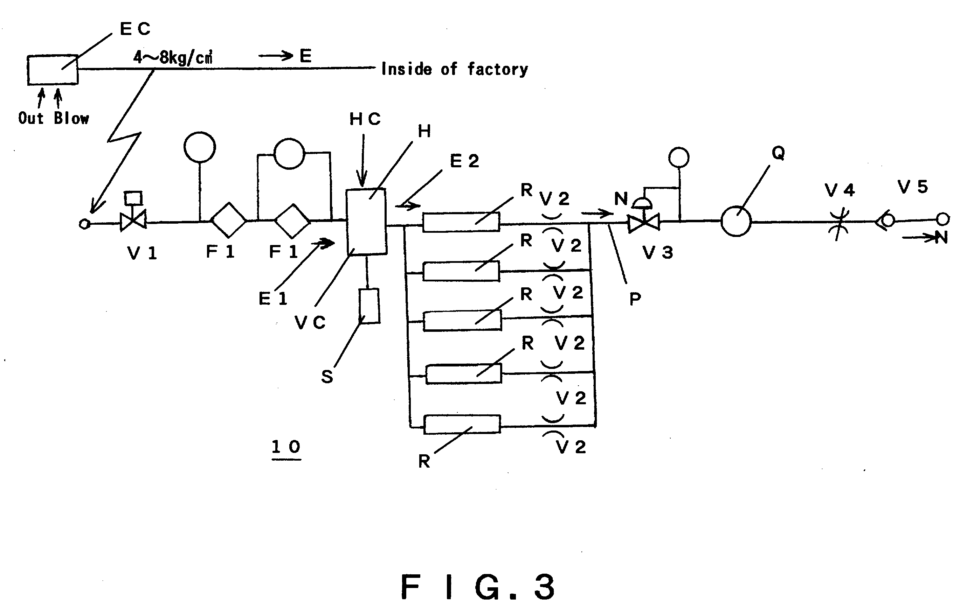

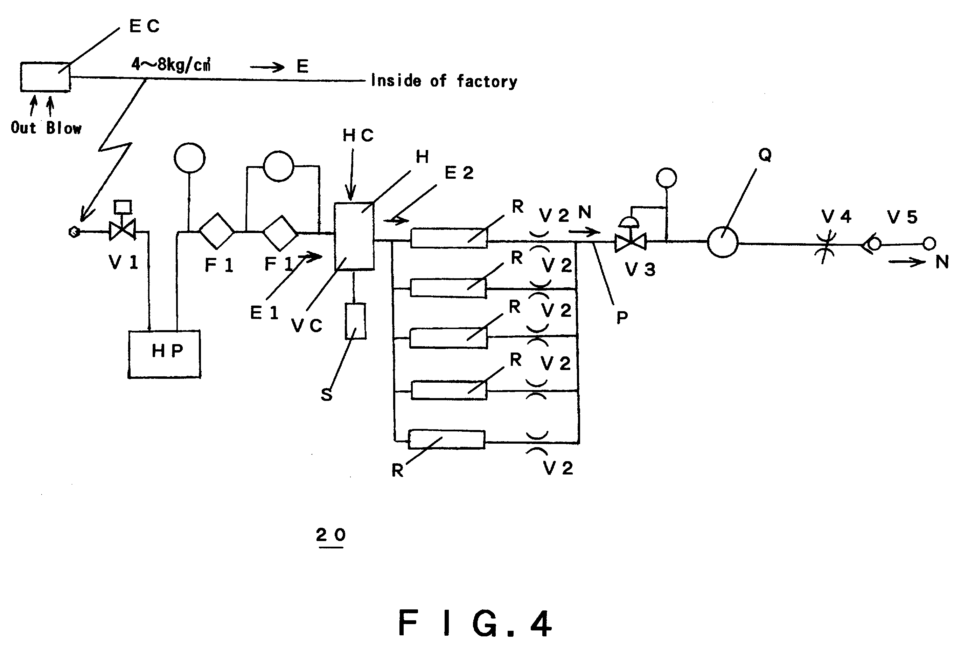

The present invention will now be described with reference to Figures as per attached, showing embodiments of the present invention. Fig. 1 is an elevational view of a working machine to which a first embodiment of the present invention is applied, in which a cutting is carried out by non-combustible gas blow. Figure 2 is an elevational view of a working machine to which a second embodiment of the present invention is applied. Figures 3 and 4 are respectively block diagrams of non-combustible gas generation devices according to the first and second embodiments.

Firstly, a method of cutting by using non-combustible gas blow according to the first embodiment of the present invention will be described with reference to Figure 1. There is a working machine 1 having a high-speed rotation spindle 3, to which a cutting tip 5A is attached. There is separately provided a blowoff nozzle n of which end aiming at the cutting tip 5A. The blowoff nozzle n may be provided, for example, on a spindle head 7 supporting the spindle 3. The blowoff nozzle n is connected to a gas supply 10 via a piping 9, thereby a non-combustible gas G, such as a nitrogen gas N or a carbon dioxide gas CO₂, is supplied to the blowoff nozzle n. A non-combustible gas generation device 10A which generates the non-combustible gas G, or a non-combustible gas tank 10B, may serve as the gas supply 10. When the nitriding function of the present invention is also expected, it is desirable to select the nitrogen gas N as the contents of the non-combustible gas generation device 10A or the non-combustible gas tank 10B.

The blow temperature of the non-combustible gas G is controlled between the room (normal) temperature and -150 °C, so that the cutting may be carried out in a most appropriate temperature. The temperature control is carried out by a cooling device (not shown) serving as a temperature control device. Accordingly, the cooling device supplies the non-combustible gas G, of which temperature is controlled to be the most appropriate temperature for application to a workpiece W (made of metal material or non-metal material such as ceramic or resin) or a tool 5, to the blowoff nozzle n. The supply of the non-combustible gas G to the blowoff nozzle n is also controlled so that a most appropriate gas blow pressure for application to the workpiece W or the tool 5 may be obtained, within the range of 0.2 - 1.0 Mpa (2 - 10 kg/cm²).

The spindle 3 of the working machine 1 is surrounded by a full closed splash guard SG in order to prevent the non-combustible gas G, which has blown out of the blowoff nozzle n toward the cutting tip 5A, from leaking outside of the full closed splash guard SG. Owing to this full closed splash guard SG, a vacuum breathing device K actively breathes and collects the spent non-combustible gas G.

Secondly, a method of cutting by using non-combustible gas blow according to the second embodiment of the present invention will be described with reference to Figure 2. There is a working machine 1 having a high-speed rotation spindle head 7 which supports a spindle 3, and a tool 5 is attached to this spindle 3. There is a center hole 5B serving as a gas supply hole, penetrating through the spindle 3 as well as the tool 5 in the axial direction of the spindle 3. The upper end of the center hole 5B goes beyond the rear section of the spindle 3, to be in connection with a gas supply (not shown) provided outside. The lower end of the center hole 5B reaches the outer surface of a cutting tip 5A of the tool 5, so that an opening is formed on the outer surface of the cutting tip 5A. Thus the concentrated supply of the non-combustible gas G at a machining point P, at which a machining is applied to a workpiece W (made of metal material or non-metal material such as ceramic or resin), can be carried out. In particular, according to the second embodiment of the present invention, it is possible to supply the non-combustible gas G inside of the workpiece W in the case of, for example, deep hole drilling, in which the non-combustible gas G cannot be supplied by using the blowoff nozzle n according to the first embodiment of the present invention. Accordingly, the most effective machining can be applied to the workpiece W regardless of the machining condition.

The non-combustible gas G such as a nitrogen gas N or a carbon dioxide gas CO₂, is supplied by a non-combustible gas generation device 10 which generates the non-combustible gas G, or by a non-combustible gas tank (not shown),which serves as a gas supply. When the nitriding function of the present invention is also expected, it is desirable to select the nitrogen gas N as the contents of the non-combustible gas generation device 10 or the non-combustible gas tank.

The blow temperature of the non-combustible gas G is controlled between the room (normal) temperature and -150 °C, so that the cutting may be carried out in a most appropriate temperature. The temperature control is carried out by a cooling device (not shown) serving as a temperature control device. Accordingly, the cooling device supplies the non-combustible gas G, of which temperature is controlled to be the most appropriate temperature for application to a workpiece W or a tool 5, to the center hole 5B. The supply of the non-combustible gas G to the center hole 5B is also controlled so that a most appropriate gas blow pressure for application to the workpiece W or the tool 5 may be obtained, within the range of 0.2 - 1.0 Mpa (2 - 10 kg/cm²).

The spindle 3 of the working machine 1 is surrounded by a full closed splash guard SG in order to prevent the non-combustible gas G, which has blown out of the cutting tip 5A, from leaking outside of the full closed splash guard SG. Owing to this full closed splash guard SG, a vacuum breathing device K actively breathes and collects a spent non-combustible gas G'. The spent non-combustible gas G' may be recycled through the process that, the spent non-combustible gas G' is supplied again from an air intake (not shown) of the non-combustible gas generation device 10, via a filter F which removes the impurity. When cooling of the spent non-combustible gas G' is required, the gas G' may be supplied from the air intake of the non-combustible gas generation device 10 via a cooling device (not shown) and the filter F, and when the higher gas pressure is required, the gas G' may also be supplied via a pressure intensifier (not shown either).

The structure and function of the non-combustible gas generation device 10 will now be described in detail with reference to Figure 3. According to the present embodiment, this device 10 serves as a nitrogen gas generation device 10, which collects only a nitrogen gas N out of ingredients of the ordinary air (atmosphere). This nitrogen gas generation device 10 utilizes a compression air supply E, which consists of the compressed air having 80 % of nitrogen and 20 % of oxygen, in order to obtain a nitrogen gas supply. In this connection, there is an air compressor EC which compresses the air to be about 0.4 - 0.8 Mpa (4 - 8 kg/cm²), and the thus obtained compression air supply E reaches whichever place or section inside of the factory via pipings for the compression air supply E. Thus the compression air supply E serves to actuate air-actuated devices or instruments inside of the factory.

The compression air supply E is firstly treated by a watery remove filter F1 (comprising single stage - three stages) via an open/shut valve V1, thereby a water-free dry air E1 is obtained. The dry air E1 is then heated to be in temperature about 50 - 60 °C (that is, a dry air E2) by an electric heater, in order to obtain a good gas exchange efficiency.

The thus obtained dry air E2 is then pumped into a plurality of filter elements R, connected in parallel, in order to collect only the nitrogen gas N out of the ingredients of the dry air E2. Each of the filter elements R is provided with a hollow fiber filter as the main component thereof. When the dry air E2 made from the compression air supply E is pumped into the hollow fiber filter, the water, oxygen and carbon dioxide gas, each of which having the heavy molecular weight, cannot pass through the hollow fiber filter, but only the nitrogen gas N having less molecular weight can pass through the filter, hence the nitrogen gas N may separately be collected and generated. The remaining water, oxygen and carbon dioxide gas are discharged to the atmosphere.

Each of the filter elements R is provided with a throttle valve V2 at the output thereof. Output pipings P of the filter elements R are concentrated as one piping P, with which an open/shut valve V3 is connected. The thus obtained nitrogen gas N then goes through a flow volume meter Q, a throttle valve V4 for the flow volume control, and an anti-reverse flow valve V5, etc., and eventually the nitrogen gas N is supplied to the outside. The number of plurality of filter elements R, as well as the connecting arrangements thereof, may be determined according to the using amount or the required purity of the nitrogen gas N, without any limitations. The connecting arrangements of the filter elements R may be in parallel or in series, or even in their (multiple) combination(s).

The present invention may also adopt a nitrogen gas generation device 20 according to the second embodiment of the present invention, as illustrated in Fig. 4. The nitrogen gas generation device 20 further comprises a pressure intensifying means HP in addition to the elements of the nitrogen gas generation device 10 according to the first embodiment as above discussed. This pressure intensifying means HP serves further intensification of the compression air supply E, running through the factory after the air was compressed. For the purpose of the pressure intensifying means HP, an air-actuated device such as a small-sized air compressor or a pressure intensifier (cylinder) may be utilized.

In regard to the intensified pressure, the compression air supply E running through the factory, of which pressure is about 4 - 8 kg/cm², is intensified to be about 0.6 - 1.2 Mpa (6 - 12 kg/cm²). Therefore, as compared with the pressure intensification of the ordinary air to be about 0.6 - 1.2 Mpa (6 - 12 kg/cm²) for which a specially designed compressor should be prepared, it is possible to intensify the pressure by only using the smaller size of air compressor or pressure intensifying cylinder, thereby the cost for equipment or the "running cost" may be reduced. Since the other elements of the nitrogen gas generation device 20 according to the second embodiment are the same as those of the nitrogen gas generation device 10 according to the first embodiment, the same numerals are applied to such a device 20, hence the explanation thereof will not be made.

The above discussed are examples showing structures of the practical devices, to which a method of cutting of metal materials and non-metal materials in a non-combustible gas atmosphere according to the present invention is applied. The cutting method according to the present invention by using the above devices, as well as the results thereof, will now be described.

According to the first embodiment of the present invention, the cutting of metal or non-metal materials by using the non-combustible gas is carried out as follows. Firstly, the non-combustible gas G such as a nitrogen gas N or a carbon dioxide gas is blown out of the blowoff nozzle n toward the cutting tip 5A attached to the spindle 3 of the working machine 1. The non-combustible gas G supplies the pressure to the cutting tip 5A and the workpiece W, so that the most appropriate pressure for the cutting tip 5A and the workpiece W is obtained within the range of 0.2 - 1.0 Mpa (2 - 10 kg/cm²). The blow temperature is also controlled to be in the most appropriate temperature between the room (normal) temperature and -150 °C.

According to the cutting in the non-combustible gas atmosphere, the cutting tip 5A and the workpiece W are cooled by the low-temperature, high-pressure non-combustible gas G, thereby the lower cutting temperature is maintained. Thus the thermal expansion of the cutting tip 5A is prohibited, and the high machining accuracy is secured. Further, there is no risk of causing a fire. In addition, the non-combustible gas G also removes the oxygen at the machining point, thereby the oxidization of the cutting tip 5A as well as the workpiece W is prohibited. After completion of cooling of the cutting tip 5A and the workpiece W, the non-combustible gas G is actively collected by the full closed splash guard SG and by the vacuum breathing device K. Accordingly, there is also no risk of causing the air pollution.

The function of the cutting method according to the first embodiment of the present invention, in which the nitrogen gas G is used in the non-combustible atmosphere, will now be described. When the tool 5 is driven at a high speed and the machining is applied to the workpiece W, the cutting tip 5A rises in temperature (more than 500 °C) due to cutting of the workpiece W. At that time, as illustrated in Fig. 1, the nitrogen gas N which is controlled to be in the most appropriate pressure for the cutting tip 5A and the workpiece W within the range of 0.2 - 1.0 Mpa (2 - 10 kg/cm²) is blown from the blowoff nozzle n. Accordingly, the space around the cutting tip 5A and the workpiece W becomes in the atmosphere of the nitrogen gas N, thus there presents the non-oxygen state around this space.

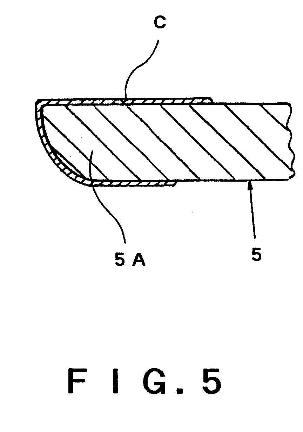

In the thus obtained non-oxygen state, when the cutting tip 5A is in the atmosphere of the nitrogen gas N, and when the high-temperature state (more than 500 °C) of the cutting tip 5A due to heat by machining is obtained, the cutting tip 5A is ready to be nitrided. Thus there is adhesively formed a nitride C on the surface of the cutting tip 5A during application of the machining to the workpiece W, as illustrated in Fig. 5. The nitride C serves to protect the cutting tip 5A as a layer of the nitride coating enjoying the superior wear resistance. If the coating has been formed on the cutting tip 5A from the beginning, the coating is strengthened in the atmosphere of the nitrogen gas N, thus the stronger wear resistance may be obtained. This is proven by the following fact, that is, when the state of the cutting tip 5A was observed during machining, there was no sparking at the cutting tip 5A even when the cutting tip reached the end of tool life, and there was no flaking (peel-off) of coating, or no adhesion of the cut chip to that point. The desirable coating thereon will be the hice coating or the multi-ply coating.

In the prior art having no atmosphere of the nitrogen gas N, with regard to the tool 5 and the cutting tip 5A, when the machining is applied to the workpiece W, the cutting tip 5A is exposed in the high-temperature atmosphere, thus the wear of the cutting tip 5A is started. According to the progress of the wear of this point, the sharpness of the cutting tip 5A becomes worse, the heating thereof is enhanced, and eventually the wear thereof is accelerated. This vicious spiral causes the sudden wear-out of the cutting tip 5A. On the contrary, according to the present invention in which the cutting tip 5A is in the atmosphere of the nitrogen gas N, the higher the cutting tip 5A becomes in temperature, the stronger the protection of the cutting tip 5A becomes since the nitriding is accelerated at such a high-temperature point. Thus the sudden wear-out of the cutting tip 5A is prohibited, and the stable sharpness of cutting is obtained for a long period.

The nitriding of the cutting tip 5A further serves to harden the surface of the cutting tip 5A, as well as to lower the friction coefficient thereof. Thus the less cutting resistance is given from the workpiece W during machining, thereby the function of lubrication may be expected even when the lubricating oil is not used. Accordingly, the long tool life, the improvement of the accuracy of the machined surface, and the lower temperature of the cut chips, can be accomplished.

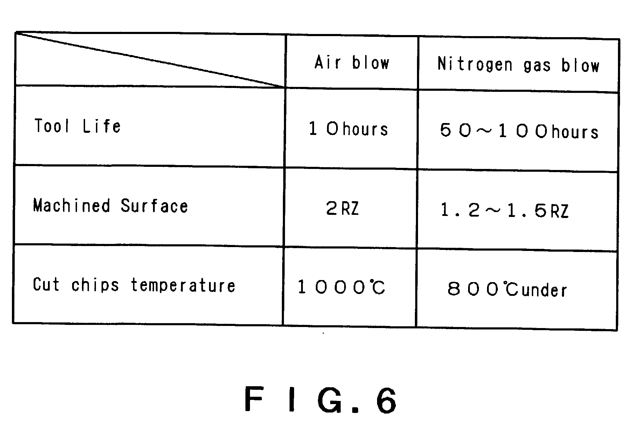

The results of cutting according to the present invention will be described with reference to a comparative table of Fig. 6. As shown in Fig. 6, while the tool life according to the conventional method of air blowing (hereinafter simply "the air blow") was not more than "10 hours," the tool life according to the present invention in which the nitrogen gas N is used for blowing (hereinafter simply "the nitrogen gas blow") was remarkably extended up to "50 - 100 hours." Further, in regard to the accuracy of the machined surface, while that of the air blow was "2 Rz," that of the nitrogen gas blow was remarkably improved as "1.2 - 1.5 Rz." Similarly, in regard to the cut chips temperature during machining, while that of the air blow was "1000 °C," that of the nitrogen gas blow was lowered as "under 800 °C."

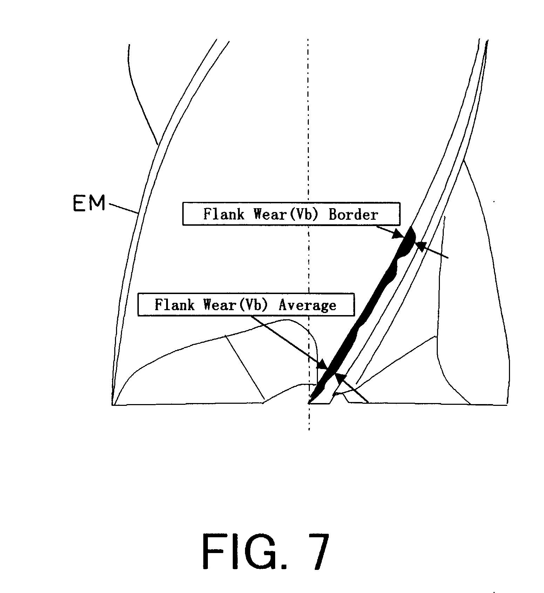

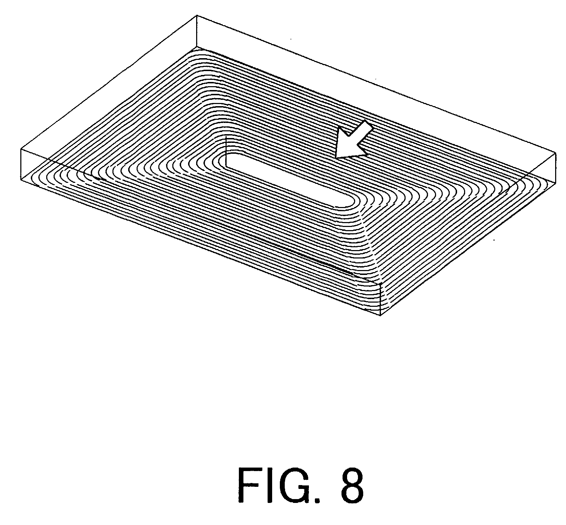

The detailed experimental results according to the present invention will now be described. Fig. 7 is an expanded view of a cutting tip of an end mill EM which was actually used for the cutting according to the present invention, with an indication of peripheral flank wear. Reference symbol Vb represents the width (amount) of the boundary wear. Firstly, the end mill EM serving as the tool 5 of Fig. 1 was attached to the spindle 3 of the working machine 1, and the nitrogen gas N was blown out of the blowoff nozzle n toward the machining point. Fig. 8 illustrates an example of a workpiece to which the machining by the end mill EM was applied. In the case of machining of Fig. 8, there was provided an end mill (φ 10) to which a hice coating (TiN, TiCN or TiAlN) had been applied. The end mill was driven at the surface speed of 25- 125 m, and the spiral outside cutting was applied to an iron steel material (S55C) workpiece under the conditions that a Z axis cutting depth was 5 mm and at X-Y axes cutting width was 2 mm. The blow pressure out of the blowoff nozzle n was controlled to be between 0.4 - 0.6 Mpa (4 - 6 kg/cm²).

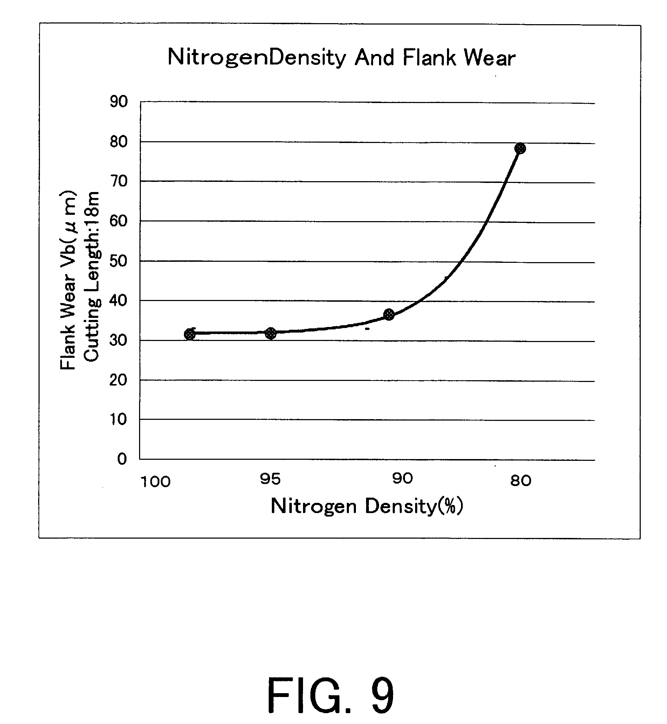

Fig. 9 is a graphic chart showing a relation between "nitrogen gas density and boundary (flank) wear amount Vb" of the cutting tip of the end mill EM when the cutting length was 18 mm. According to Fig. 9, when there was at least 90 % of the nitrogen gas density (that is, 10 % of oxygen density), the boundary wear amount Vb decreased from 80 to 60 (µm), thus the effect of the nitrogen gas N was proven.

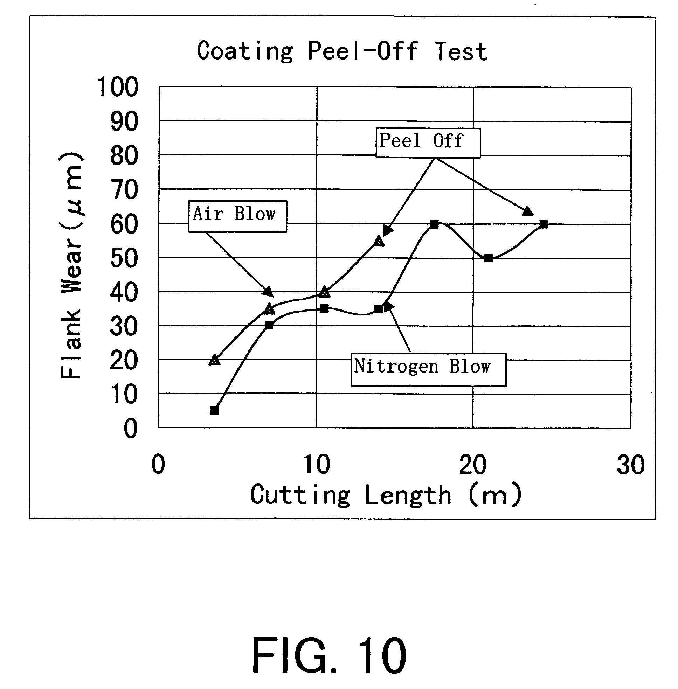

Fig. 10 shows results of a coating peel-off test in regard to the end mill EM, in which the difference between the "nitrogen gas blow" and the "air blow" is explained with reference to the relations of the cut length (m) of the workpiece to the wear amount (µm) of the tool are explained. In this peel-off test, the progress of wear amounts of both the air blow and the nitrogen gas blow were very similar (5 - 35 µm and 20 - 40 µm) before the cut length reached 10 m. After that, when the cut length reached 15 m, the air blow caused peel-off at 60 µm of the wear amount. However, in the case of nitrogen gas blow, even when the cut length reached 20 m, the wear amount thereof was withheld at 60 µm. It was when the cut length reached 25 m that the nitrogen gas blow eventually allowed the peel-off at 60 µm of the wear amount.

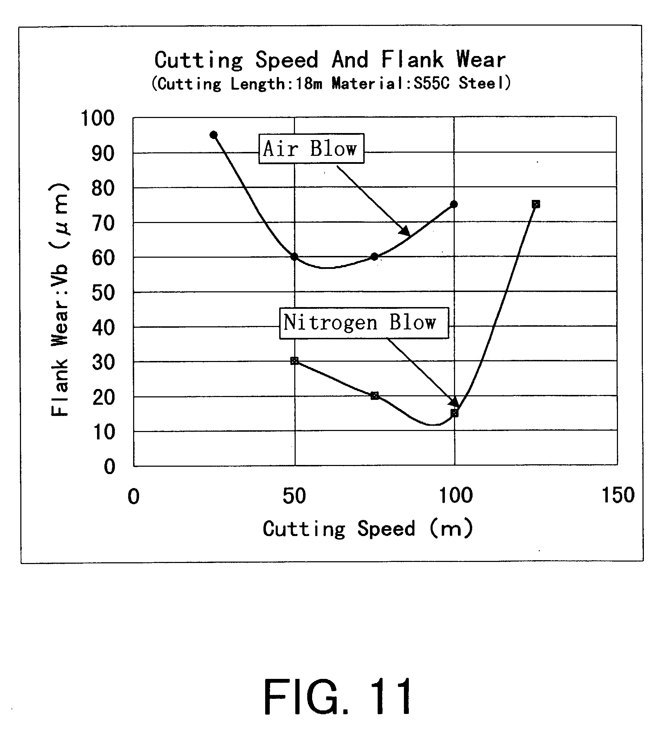

Fig. 11 shows results of a wear-out test, in which the relation between the surface speed (m) of the end mill EM and the wear amount Vb is explained. According to Fig. 11, the air blow represents the characteristic curve of wear amount Vb as: 60 → 57 → 75 (µm) at the surface speed of 50 - 100 m. On the contrary, the nitrogen gas blow represents the characteristic curve of wear amount Vb as: 30 → 10 → 23 (µm) at the surface speed of 50 - 100 m, hence it is understood that the wear amount Vb of the nitrogen gas blow was very small.

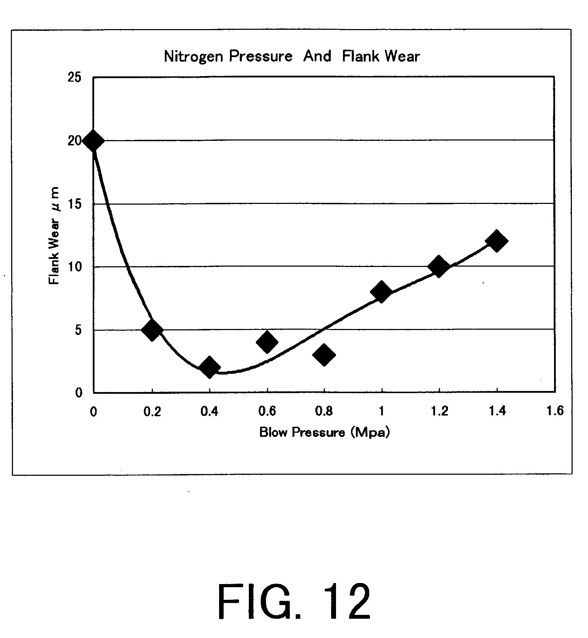

Fig. 12 shows a result of a test, in which, with reference to an iron steel material (S55C), the relation between the nitrogen gas blow pressure and the peripheral flank wear amount of the end mill EM is explained. When 0 Mpa (0 kg/cm²) of the nitrogen gas pressure was applied to the end mill EM and the iron steel material, the wear amount was 20 µm. When the gas pressure was 0.2 Mpa (2 kg/cm²), the wear amount decreased to 5 µm. When the gas pressure was 0.4 Mpa (4 kg/cm²), the smallest wear amount, that is, 2.5 µm, was recorded. Then the characteristic curve gently rises as illustrated in Fig. 12, as follows: 4 µm at 0.6 Mpa (6 kg/cm²), 3 µm at 0.8 Mpa (8 kg/cm²), and 8 µm at 1.0 Mpa (10 kg/cm²). As seen from the characteristic curve, the most appropriate amount of the nitrogen gas pressure was proven to be within a range of 0.2 - 1.0 Mpa (2 - 10 kg/cm²). In regard to the other metal materials, the obtained characteristic curves were almost the same as that of Fig. 12.

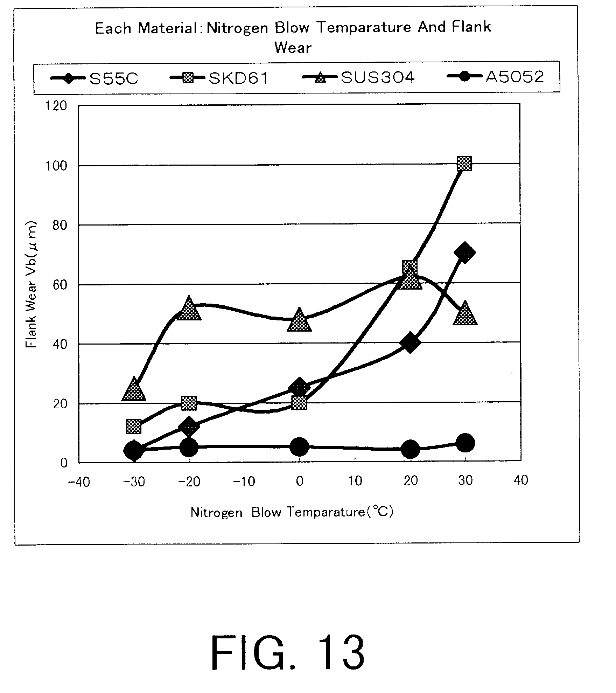

Fig. 13 shows a result of a test, in which the relation between the nitrogen gas blow temperature and the peripheral flank wear amount of the end mill EM is explained. In the test of Fig. 13, the nitrogen gas blow temperature was set between -30 °C and +30 °C, and the respective peripheral flank wear amounts Vbs of the end mill EM were measured according to the type of metal materials (iron steels: S55C and SKD 61, stainless steel: SUS 304, aluminum material: A5052). As illustrated in Fig. 13, when the temperature is between -30 °C and +30 °C, each metal material represents smaller wear amount Vb. However, in regard to the iron steel materials (S55C and SKD 61), it is understood that the wear amounts Vbs suddenly rose at +30 °C, as 70 µm and 100 µm, respectively.

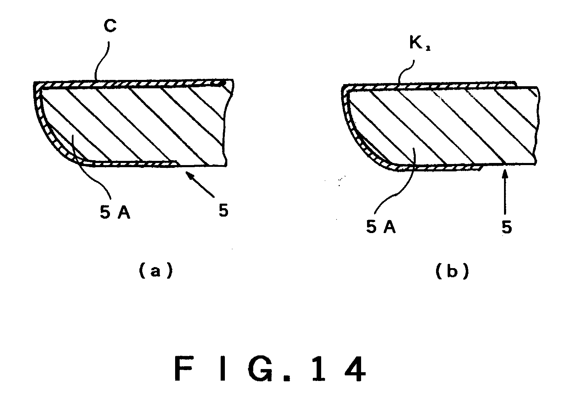

The actual cutting of aluminum material according to the present invention, and the result thereof, will be described with reference to Fig. 14. The nitrogen gas N is blown out of the blowoff nozzle n toward the cutting tip 5A of the tool 5 attached to the spindle 3 of the working machine 1. The nitrogen gas N supplies the pressure to the cutting tip 5A and a workpiece W', so that the most appropriate pressure for the cutting tip 5A and the workpiece W' is obtained within the range of 0.2 - 1.0 Mpa (2 - 10 kg/cm²). The blow temperature is also controlled to be in the most appropriate temperature between the room (normal) temperature and -150 °C.

When the cutting tip 5A is driven at a high speed and the machining is applied to the workpiece W', the cutting tip 5A rises in temperature (more than 500 °C) due to cutting of the workpiece W'. At that time, as illustrated in Fig. 1, the nitrogen gas N which is controlled to be in the most appropriate pressure for the cutting tip 5A and the aluminum workpiece W' within the range of 0.2 - 1.0 Mpa (2 - 10 kg/cm²) is blown from the blowoff nozzle n. Accordingly, the space around the cutting tip 5A and the workpiece W' becomes in the atmosphere of the nitrogen gas N, thus there presents the non-oxygen state around this space.

In the thus obtained non-oxygen state, as the cutting tip 5A is in the atmosphere of the nitrogen gas N, and as the high-temperature state (more than 500 °C) of the cutting tip 5A due to heat by machining is obtained, the cutting tip 5A is ready to be nitrided. Thus there is formed a nitride C on the surface of the cutting tip 5A, as illustrated in Fig. 14 (a). The nitride C serves to protect the cutting tip 5A as a layer of the nitride coating enjoying the superior wear resistance.

On the contrary, with regard to the cutting tip 5A, when the machining is applied to the aluminum workpiece W' in the atmosphere of the air blow, there is formed a built-up edge K1 on the metal surface of the cutting tip 5A as illustrated in Fig. 14 (b), due to characteristic of the workpiece W', that is, the aluminum material. Thus the sharpness of the cutting tip 5A becomes worse, which results in the short tool life, the inferior machined surface, and the higher cut power temperature. The results of this comparative test are shown in Fig. 6, in which the cooling by air blow and the cooling by nitrogen gas blow were applied to the same type of the cutting tip 5A. According to results of the actual machining to the aluminum workpiece W', the almost same results as those of the iron steel material were obtained.

In the prior art, when the machining is applied to the aluminum material, the cutting tip 5A is generally exposed in the high-temperature atmosphere, thus the wear of the cutting tip 5A is started. According to the progress of the wear of this point, the sharpness of the cutting tip 5A becomes worse, the heating thereof is enhanced, and eventually the wear thereof is accelerated. This vicious spiral causes the sudden wear-out of the cutting tip 5A. On the contrary, according to the present invention in which the cutting tip 5A is in the atmosphere of the nitrogen gas N, the higher the cutting tip 5A becomes in temperature, the stronger the protection of the cutting tip 5A becomes since the nitriding is accelerated at such a high-temperature point. Thus the sudden wear-out of the cutting tip 5A is prohibited, and the stable sharpness of cutting is obtained for a long period.

In particular, according to the method of cutting by using the nitrogen gas, the cutting tip 5A is cooled by the low-temperature, high-pressure nitrogen gas N, thereby the lower cutting temperature is maintained. Thus the thermal expansion of the cutting tip 5A is prohibited, and the high machining accuracy is secured. Further, since the non-oxygen state is obtained, there is no risk of causing a fire. In addition, the nitrogen gas N also removes the oxygen at the machining point, thereby the oxidization of the cutting tip 5A is prohibited.

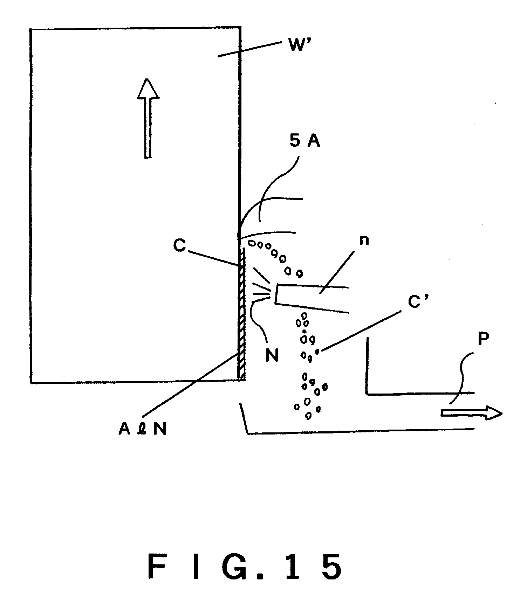

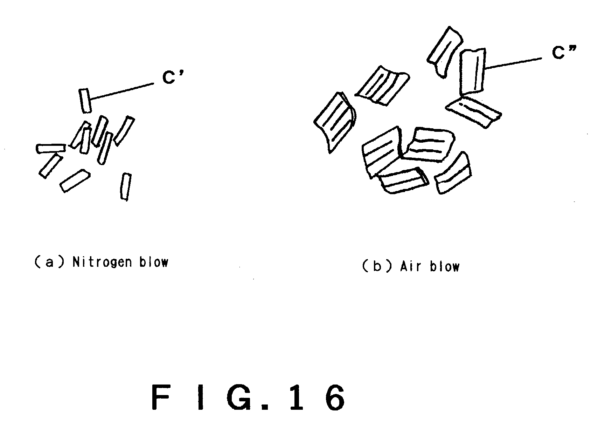

The present embodiment is not limited to the method of cutting of the aluminum material. For example, the present invention may also be utilized as a method of nitriding of aluminum material. Accordingly, a further embodiment of the present invention in which the aluminum material is nitrided will now be described with reference to Figs. 15 and 16. The blowoff nozzle n is set aiming at the aluminum workpiece W' to which the machining is applied by the cutting tip 5A of the tool 5 attached to the spindle 3 of the working machine 1. The blowoff nozzle n is mounted on the spindle head 7, etc.

The blow temperature of the nitrogen gas N blown out of the blowoff nozzle n is controlled to be in the most appropriate temperature between the room (normal) temperature and -150 °C. The temperature control is carried out by the cooling device, so that the nitrogen gas N controlled to be in the most appropriate temperature for the aluminum workpiece W' is supplied to the blowoff nozzle n. The blow pressure of the nitrogen gas N is also controlled so that the most appropriate pressure for the aluminum workpiece W' is obtained within the range of 0.2 - 1.0 Mpa (2 - 10 kg/cm²).

When the tool 5 is driven at a high speed and the machining is applied to the workpiece W' made of aluminum material, the cutting tip 5A rises in temperature (more than 500 °C) due to cutting of the aluminum workpiece W'. At that time, as illustrated in Fig. 15, the nitrogen gas N which is controlled to be in the most appropriate pressure for the aluminum workpiece W' within the range of 0.2 - 1.0 Mpa (2 - 10 kg/cm²) is blown from the blowoff nozzle n. Accordingly, the space around the aluminum workpiece W' becomes in the atmosphere of the nitrogen gas N, thus there presents the non-oxygen state around this space.

In the thus obtained non-oxygen state, as the aluminum workpiece W' is in the atmosphere of the nitrogen gas N, and as the high-temperature state (more than 500 °C) of the workpiece W' due to heat by machining is obtained, the aluminum workpiece W' is ready to be nitrided. Thus there is formed a nitride C (AlN) on the surface of the aluminum workpiece W', as illustrated in Fig. 15. The thus obtained nitride C is instantly cut by the cutting tip 5A, and falls as cut chips C' in the crumble form. The fallen cut chips C' are then perfectly collected, without leaving a single chip, by a cut chip collection pipe P' actuated by vacuum. Each of the crumble cut chips C' represented a separate rice-shape, as shown in Fig. 16 (a). On the contrary, when cut chips C" were obtained by air blow or any other cooling method, each of the thus obtained cut chips C" represented a parallel chain-shape, as illustrated in Fig. 16 (b).

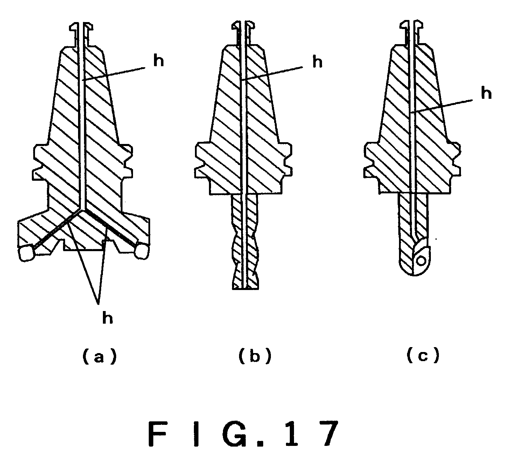

In addition, with regard to the second embodiment of the present invention as illustrated in Fig. 2, in which the center hole 5B is penetrated through the various cutting tools so that the non-combustible gas G or the nitrogen gas G is supplied thereto according to the present invention, the special functions and effects will be described with reference to Figs. 17 (a), (b) and (c), which are shown as examples of practical arrangement of tools. Figs. 17 (a), (b) and (c) are sectional views, of a face mill (a), an end mill (b), and a ball end mill (c), respectively.

As shown in Fig. 17, there are provided center holes h, instead of reference numeral 5A of Fig. 2, penetrating through the respective tools. The non-combustible gas G such as a nitrogen gas N is supplied to this center hole h. In the thus structure, there are found special effects as described below:

Firstly, it is possible to blow the nitrogen gas N, etc., directly to the cutting tip 5A from the center hole h having an opening at the position of the cutting tip 5A. Thus the maximum function and effect can be obtained even by the minimum flow amount of the nitrogen gas N, etc., thereby the running cost may be reduced, and the minimum sizing of the gas generation device may be accomplished.

Secondly, the nitrogen gas N is attracted and adhered to the layer of coating on the cutting tip 5A, thus the new layer of nitride coating is formed. Therefore the stronger protection by the coating can be accomplished.

Thirdly, the oxidation of the cutting tip 5A is prohibited, and the sufficient cooling effect is also obtained. Hence the heat of the cutting tip 5A is kept under 800 - 900 °C, thereby the long tool life of the cutting tip 5A may be obtained.

Since the method of cutting according to the present invention has the sufficient oxidation resistance and the cooling effect, it was also confirmed that, after obtaining the non-oxygen state against the metal material which might have been overheated at the machining point, the present invention effectively prevented the metal material from being ignited. Therefore, as long as the object is to obtain the non-oxygen state at the machining point, it is possible to use a carbon dioxide gas, instead of the nitrogen gas N, as the non-combustible gas G.

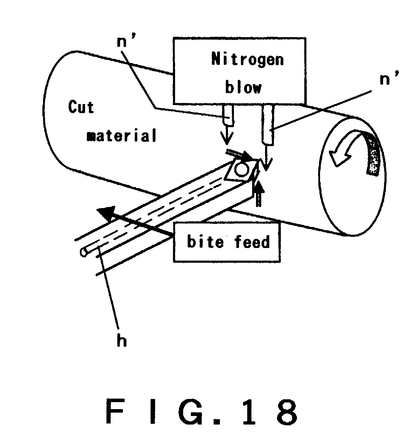

It is clear that the application of the method of cutting of metal materials and non-metal materials in a non-combustible gas atmosphere according to the present invention, is not limited to the working machine 1 as above discussed. For example, the present invention can be applied to a lathe, a gear cutting machine, a grinding machine, etc. Further, the present invention can also be applied to a drilling machine which drills a narrow hole, or to an automated production line. Fig. 18 shows an embodiment of the present invention applied to a lathe. The nitrogen gas may be blown out of nozzles n', n' as per illustrated, or may be supplied to a cutting tip from a center hole h provided on a bite feed. In addition, the metal material as the cut material is not limited to the embodiments as above discussed. The characteristics of nitrogen gas or carbon dioxide gas can exactly be reflected on any type of the used metal material, thus the desired effects can be obtained. When the present invention is applied to a non-metal material such as resin or ceramic, it is of course possible to obtain the desired effects as well.

The present invention has the following merits.

Firstly, when the density of the non-combustible gas such as a nitrogen gas or a carbon dioxide gas, supplied to the cutting tip of the tool attached to the spindle of the working machine such as a lathe, or supplied to the space around the cutting tip, is set not to be less than 90 %, since the non-combustible gas is distributed as the non-combustible gas atmosphere to the cutting tip or the space around the cutting tip, the cooling effect and the oxidation resistance effect are given to the cut chips or the cutting tip which might have been heated during cutting, thereby the wear-out of the cutting tip is avoided for a longer time, thus the long tool life can be obtained.

Secondly, when the density of the nitrogen gas, supplied to the cutting tip of the tool attached to the spindle of the working machine such as a lathe, is set not to be less than 90%, and when the machining by the cutting tip is applied to the workpiece such as a metal material at the machining temperature of not less than 500 °C, the surface of the cutting tip is nitrided due to nitrogen gas and surrounding temperature of not less than 500 °C, thereby the wear resistance of the cutting tip improves, thus the long tool life can be obtained.

Thirdly, when the layer of coating such as a hice coating or a multi-ply coating has been formed on the cutting tip, to which the nitrogen gas is supplied, and which is heated not to be less than 500 °C, the coating is further strengthened, thereby no sparking, no defect such as a peel-off of coating, or no adhesion of cut chips is observed at the cutting tip even when the tool life of the cutting tip ends, thus the still longer tool life can be obtained.

Fourthly, when the blow pressure of the non-combustible gas is controlled so that the most appropriate pressure, according to the type of metal material or non-metal material to be machined or the type of tool to be used, is obtained within the range of 0.2 - 1.0 Mpa (2 - 10 kg/cm²), the non-combustible gas can effectively and economically be blown, thereby the effective machining of the metal material or non-metal material as well as the rational extension of the tool life can be obtained.

Fifthly, when the blowoff nozzle is used as a non-combustible gas supply means at the machining point of the cutting tip, the gas supply to the most appropriate machining position can be carried out regardless of shape of tool, thereby the most effective blow of the non-combustible gas can be accomplished. Further, when a supplying nozzle (the center hole) penetrated through the tool is used as a non-combustible gas blow means, the concentrated gas supply at the narrow machining point of the cutting tip can be carried out. In particular, even in the case of deep hole drilling machine, etc., it is possible to supply the gas to the workpiece to which the ordinary blowoff nozzle cannot supply the gas. Accordingly, the most effective non-combustible gas blow can be accomplished regardless of machining condition.

Sixthly, when the non-combustible gas is blown to the iron steel type of metal material, the cooling effect and the oxidation resistance are given to the machining point of the metal material, and simultaneously the non-combustible gas is supplied to the cutting tip of the tool. Accordingly, in addition to the cooling effect and the oxidation resistance given to the cutting tip, the nitriding of the cutting tip is also made, thereby the long tool life can be obtained, thus the accurate machining of the iron steel type of metal material can be maintained for a long period.

Seventhly, when the non-combustible gas is blown to the aluminum type of metal material, the cooling effect and the oxidation resistance are given to the machining point of the aluminum material. In particular, there is no adhesion of aluminum cut chips to the cutting tip of the tool regardless of existence of coating, and the good condition of cut chips can be obtained due to cooling effect. Accordingly, as compared with the method using the air blow, the more accurate machining of the aluminum material can be carried out.

## Claims

1. A method of cutting of metal materials and non-metal materials in a non-combustible gas atmosphere by cutting metal materials and non-metal materials (W) by a tool (5) attached to a working machine (1), comprising a step of making a non-combustible gas (G) atmosphere such as a nitrogen gas or a carbon dioxide gas of which density is not less than 90 % at a cutting tip (5A) which applies machining to said metal materials and non-metal materials (W) or at a space around said cutting tip (5A).

2. A method of cutting of metal materials and non-metal materials in a non-combustible gas atmosphere by cutting metal materials and non-metal materials (W) by a tool (5) attached to a working machine (1), comprising steps of, making a non-oxide gas (G) atmosphere by a nitrogen gas (N) of which density is not less than 90 % at a cutting tip (5A) which applies machining to said metal materials and non-metal materials (W) or at a space around said cutting tip (5A), and carrying out said machining by said cutting tip (5A) at a machining temperature of not less than 500 °C.

3. The method of cutting of metal materials and non-metal materials in a non-combustible gas atmosphere as claimed in claim 2, further comprising a step of forming a coating such as a hice coating or a multi-ply coating on said cutting tip (5A).

4. The method of cutting of metal materials and non-metal materials in a non-combustible gas atmosphere as claimed in claim 1, further comprising a step of supplying a most appropriate gas blow pressure of said non-combustible gas (G) at a pressure selected between 0.2 Mpa (2 kg/cm²) and 1.0 Mpa (10 kg/cm²).

5. The method of cutting of metal materials and non-metal materials in a non-combustible gas atmosphere as claimed in claim 2, further comprising a step of supplying a most appropriate gas blow pressure of said non-combustible gas (G) at a pressure selected between 0.2 Mpa (2 kg/cm²) and 1.0 Mpa (10 kg/cm²).

6. The method of cutting of metal materials and non-metal materials in a non-combustible gas atmosphere as claimed in claim 1, further comprising a step of supplying said non-combustible gas (G) to said cutting tip (5A) by a blowoff nozzle (n).

7. The method of cutting of metal materials and non-metal materials in a non-combustible gas atmosphere as claimed in claim 2, further comprising a step of supplying said non-combustible gas (G) to said cutting tip (5A) by a blowoff nozzle (n).

8. The method of cutting of metal materials and non-metal materials in a non-combustible gas atmosphere as claimed in claim 1, further comprising a step of supplying said non-combustible gas (G) to said cutting tip (5A) by a supplying hole (5B) penetrating through said tool (5).

9. The method of cutting of metal materials and non-metal materials in a non-combustible gas atmosphere as claimed in claim 2, further comprising a step of supplying said non-combustible gas (G) to said cutting tip (5A) by a supplying hole (5B) penetrating through said tool (5).

10. The method of cutting of metal materials and non-metal materials in a non-combustible gas atmosphere as claimed in claim 1, wherein said metal material (W) is an iron steel material.

11. The method of cutting of metal materials and non-metal materials in a non-combustible gas atmosphere as claimed in claim 2, wherein said metal material (W) is an iron steel material.

12. The method of cutting of metal materials and non-metal materials in a non-combustible gas atmosphere as claimed in claim 1, wherein said metal material (W) is an aluminum material (W').

13. The method of cutting of metal materials and non-metal materials in a non-combustible gas atmosphere as claimed in claim 2, wherein said metal material (W) is an aluminum material (W').
